(19) Europäisches Patentamt / European Patent Office / Office européen des brevets

(11) **EP 1 986 776 B1**

(12) **FASCICULE DE BREVET EUROPEEN**

(45) Date de publication et mention de la délivrance du brevet:
**10.03.2010 Bulletin 2010/10**

(21) Numéro de dépôt: **06841968.8**

(22) Date de dépôt: **14.12.2006**

(51) Int Cl.:
*B01J 35/02* *(2006.01)*   *B01J 37/00* *(2006.01)*
*B01J 37/10* *(2006.01)*   *B01J 23/40* *(2006.01)*
*B01J 23/74* *(2006.01)*   *C10G 45/04* *(2006.01)*
*C10G 45/08* *(2006.01)*   *C10G 47/10* *(2006.01)*
*B01J 21/04* *(2006.01)*   *B01J 35/10* *(2006.01)*

(86) Numéro de dépôt international:
**PCT/FR2006/002765**

(87) Numéro de publication internationale:
**WO 2007/080288 (19.07.2007 Gazette 2007/29)**

(54) **CATALYSEUR SUPPORTÉ DE FORME IRREGULIERE , NON SPHERIQUE ET PROCEDE D'HYDROCONVERSION DE FRACTIONS PÉTROLIÈRES LOURDES**

UNREGELMÄSSIG GEFORMTER, NICHT KUGELFÖRMIGER TRÄGERKATALYSATOR UND VERFAHREN ZUR HYDRIERENDEN KONVERSION VON SCHWEREN ERDÖLFRAKTIONEN

IRREGULARLY SHAPED, NON-SPHERICAL SUPPORTED CATALYST AND PROCESS FOR HYDROCONVERSION OF HEAVY PETROLEUM FRACTIONS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2005 FR 0513166**
**22.12.2005 FR 0513170**

(43) Date de publication de la demande:
**05.11.2008 Bulletin 2008/45**

(73) Titulaire: **Institut Français du Pétrole**
**92852 Rueil Malmaison Cedex (FR)**

(72) Inventeurs:
• **ROY-AUBERGER, Magalie**
**F-38300 Nivolas Vermelle (FR)**
• **GUILLAUME, Denis**
**F-38200 Vienne (FR)**
• **KRESSMANN, Stéphane**
**F-69360 Serezin du Rhône (FR)**
• **LE LOARER, Jean-Luc**
**F-30340 Salindres (FR)**
• **CHAPAT, Jean-François**
**F-30340 Salindres (FR)**

(56) Documents cités:
FR-A- 2 528 721   FR-A- 2 534 828
FR-A- 2 538 813   FR-A- 2 538 814
FR-A- 2 867 988   US-A- 6 006 308

## Description

### Domaine technique

La présente invention concerne un catalyseur utilisable pour l'hydrotraitement et/ou l'hydroconversion de charges hydrocarbonées lourdes contenant des métaux, ledit catalyseur comprenant un support sous forme d'agglomérats à base d'alumine, majoritairement irréguliers et non sphériques dont la forme spécifique résulte d'une étape de concassage, et comprenant au moins un métal catalytique ou un composé de métal catalytique du groupe VIB (groupe 6 de la nouvelle notation de la table périodique des éléments), et/ou au moins un métal catalytique ou un composé de métal catalytique du groupe VIII (groupe 8, 9, et 10 de la nouvelle notation de la table périodique des éléments), éventuellement au moins un élément dopant choisi dans le groupe constitué par le phosphore, le bore, le silicium (ou de la silice qui n'appartient pas à celle qui pourrait être contenue dans le support choisi) et les halogènes, ledit catalyseur étant constitué essentiellement d'une pluralité d'agglomérats juxtaposés, formés chacun d'une pluralité de plaquettes aciculaires, les plaquettes de chaque agglomérat étant orientées généralement radialement les unes vis-à-vis des autres et par rapport au centre de l'agglomérat. La forme spécifique du catalyseur lui confère des performances améliorées dans sa mise en oeuvre pour l'hydroconversion/hydrotraitement des charges contenant des métaux.

### ART ANTERIEUR

Il est connu de l'homme du métier que lors des réactions d'hydroraffinage et/ou d'hydroconversion de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous forme d'un sulfure solide qui vient se fixer sur la surface interne des pores. C'est en particulier le cas des complexes du vanadium, du nickel, du fer, du sodium, du titane, du silicium, et du cuivre qui sont naturellement présents dans les pétroles bruts en plus ou moins grande abondance selon l'origine du pétrole, et qui, lors des opérations de distillation, ont tendance à se concentrer dans les fractions à point d'ébullition élevé et en particulier dans les résidus. C'est aussi le cas des liquéfiats de charbon qui renferment des métaux en particulier du fer et du titane. Le terme général hydrodémétallation est utilisé pour désigner les réactions de destruction ou de déaggrégation des complexes organo-métalliques dans les hydrocarbures.

L'accumulation des dépôts solides dans les pores du catalyseur peut se poursuivre jusqu'au bouchage complet d'une partie des pores commandant l'accès des réactifs à une fraction du réseau poreux interconnecté de telle sorte que cette fraction devient inactive alors même que les pores de cette fraction sont seulement faiblement encombrés ou même intacts. Ce phénomène peut donc provoquer une désactivation prématurée et très importante du catalyseur. Il est particulièrement sensible dans le cas des réactions d'hydrodémétallation en présence d'un catalyseur hétérogène supporté. Par hétérogène, on entend non soluble dans la charge d'hydrocarbures. On constate en effet, dans ce cas, que les pores de la périphérie s'obstruent plus vite que les pores centraux. De même, les bouches des pores s'obstruent plus vite que leurs autres parties. L'obstruction des pores va de pair avec une réduction progressive de leur diamètre, ce qui entraîne une limitation accrue de la diffusion des molécules et une accentuation du gradient de concentration, donc une accentuation de l'hétérogénéité du dépôt depuis la périphérie vers l'intérieur des particules poreuses au point que l'obstruction complète des pores débouchant à l'extérieur se produit très rapidement : l'accès à la porosité interne presque intacte des particules est alors fermé aux réactifs et le catalyseur est prématurément désactivé.

Le phénomène qui vient d'être décrit est bien connu sous le nom de colmatage aux bouches des pores. Les preuves de son existence et l'analyse de ses causes ont été publiées à plusieurs reprises dans la littérature scientifique internationale.

Un catalyseur d'hydrotraitement de coupes hydrocarbonées lourdes contenant des métaux doit donc être composé d'un support présentant un profil de porosité, une structure poreuse et une forme (géométrie) particulièrement adaptés aux contraintes diffusionnelles intragranulaires spécifiques aux hydrotraitements pour éviter les problèmes de colmatage mentionnés ci-dessus.

Les catalyseurs usuellement employés sont sous forme de billes ou d'extrudés et sont composés d'un support à base d'alumine présentant une porosité particulière et d'une phase active à base de sulfures mixtes constitués à la fois d'un sulfure d'un métal du groupe VIB (de préférence le molybdène) ainsi que d'un sulfure d'un métal du groupe VIII (de préférence le Ni ou le Co). Les métaux sont déposés à l'état oxyde et sont sulfurés pour être actifs en hydrotraitement. Le rapport atomique entre l'élément du groupe VIII et l'élément du groupe VIB considéré comme optimal usuellement est compris entre 0,4 et 0,6 atome groupe VIII/atome groupe VIB. Récemment, il a été montré dans le document EP 1 364 707 A1 (FR 2 839 902) qu'indépendamment de la texture poreuse un rapport inférieur à 0,4 permet de limiter la désactivation des catalyseurs et ainsi d'allonger la durée de vie des catalyseurs.

Il est connu de l'homme du métier qu'il existe deux types de support à base d'alumine des catalyseurs d'hydroraffinage et/ou d'hydroconversion de charges hydrocarbonées lourdes contenant des métaux. Ces supports se distinguent dans un premier temps par leurs profils de répartition poreuse.

Les catalyseurs à profil de porosité bimodale sont très actifs, mais présentent une moins bonne capacité de rétention que les catalyseurs à profil de porosité polymodale.

Le profil de porosité polymodale correspond à une courbe de distribution cumulée du volume poreux en fonction du diamètre de pores obtenue par la méthode d'intrusion du mercure qui n'est ni monomodale ni bimodale, en ce sens qu'il n'apparaît pas de familles de pores distinctes dont les diamètres de pores seraient centrés sur des valeurs moyennes bien définies, mais une répartition relativement continue des pores entre deux valeurs extrêmes de diamètre. Entre ces valeurs extrêmes, il n'y a pas de palier horizontal sur la courbe de répartition poreuse. Cette répartition polymodale est liée à une structure poreuse en "bogue de châtaigne" ou "en oursins de mer" obtenue avec des agglomérés d'alumine préparés par déshydratation rapide de l'hydrargillite puis agglomération de la poudre d'alumine flash obtenue selon un brevet de la demanderesse (US 4,552,650 FR-A-2 528 721 - IFP). Les agglomérés d'alumine ainsi préparés peuvent se présenter sous forme de billes ou sous forme d'extrudés comme le montrent les brevets FR 2,764,213 et US 6,043,187. La structure "en bogue de châtaigne" ou "en oursins de mer", est constituée d'une pluralité d'agglomérats juxtaposés formés chacun d'une pluralité de plaquettes aciculaires, les plaquettes de chaque agglomérat étant orientées généralement radialement les unes vis-à-vis des autres et par rapport au centre de l'agglomérat. Au moins 50% des plaquettes aciculaires ont une dimension suivant leur axe de plus grand développement comprise entre 0,05 et 5 micromètres et de préférence entre 0,1 et 2 micromètres, un rapport de cette dimension à leur largeur moyenne compris entre 2 et 20, et de préférence entre 5 et 15, un rapport de cette dimension à leur épaisseur moyenne compris entre 1 et 5000, et de préférence entre 10 et 200. Au moins 50% des agglomérats de plaquettes aciculaires constituent une collection de particules pseudo-sphériques de taille moyenne comprise entre 1 et 20 micromètres, de préférence entre 2 et 10 micromètres. Des images très adéquates pour représenter une telle structure sont un tas de bogues épineuses de châtaigne, ou encore un tas d'oursins de mer, d'où la dénomination de structure poreuse "en bogue de châtaigne" ou "en oursins de mer" qui est utilisée par l'homme du métier.

La majorité des pores est constituée par les espaces libres situés entre les plaquettes aciculaires rayonnantes. Ces pores, de par leur nature "en coins", sont de diamètre continûment variable entre 100 et 1000 Å. Le réseau de macropores interconnectés résulte de l'espace laissé libre entre les agglomérats juxtaposés.

Ces catalyseurs à profil de porosité polymodale présentent une distribution poreuse (déterminée par la technique de porosimétrie au mercure) caractérisée de préférence comme suit :

- Volume poreux total compris entre 0,7 et 2 cm$^3$/g,
- % du volume poreux total en pores de diamètre moyen inférieur à 100 Å : entre 0 et 10,
- % du volume poreux total en pores de diamètre moyen compris entre 100 et 1000Å : entre 40 et 90,
- % du volume poreux total en pores de diamètre moyen compris entre 1000 et 5000 Å : entre 5 et 60,
- % du volume poreux total en pores de diamètre moyen compris entre 5000 et 10000 Å : entre 5 et 50,
- % du volume poreux total en pores de diamètre moyen supérieur à 10000 Å : entre 5 et 20.

La surface spécifique mesurée par la méthode B.E.T. de ces catalyseurs est comprise entre 50 et 250 m$^2$/g.

La structure poreuse en "bogue de châtaigne" ou "en oursins de mer" associée aux caractéristiques de répartition poreuse décrite ci-dessus permet l'obtention de catalyseurs d'hydroraffinage et/ou d'hydroconversion à très forts pouvoirs de rétention, tout en maintenant une activité en hydrodémétallation élevée, performances que ne peuvent réaliser les catalyseurs bimodaux. Les raisons sont que la forme en "coin" des mésopores de la structure en "bogue de châtaigne" ou en "oursins de mer" compense ou supprime les gradients de concentration en réactifs qui s'établiraient normalement dans un pore cylindrique, phénomène s'ajoutant à une géométrie très favorable pour s'opposer au colmatage des bouches de pores. En outre, chaque mésopore ou presque a un accès indépendant des autres à la macroporosité interstitielle favorisant l'accumulation homogène des dépôts sans colmatage prématurément désactivant.

Ces catalyseurs présentent néanmoins l'inconvénient d'être moins actifs en activité initiale que les catalyseurs bimodaux sur les fonctions HDM (hydrodémétallation), HDAC$_7$ (hydroconversion des asphaltènes insolubles dans le n-heptane), HDCCR (hydroconversion des résidus carbonés quantifiés par l'analyse du Carbone ConRadson).

Dans les procédés d'hydroconversion à lit bouillonnant traitant des charges hydrocarbonées à fortes teneurs en métaux (Ni+V supérieur à 250 ppm poids par exemple), les moins bonnes performances initiales de ce catalyseur à structure poreuse "en bogue de châtaigne"
ou "en oursins de mer" rendent nécessaire une quantité de catalyseur frais d'appoint journalier plus importante.

Pour l'hydroconversion en lit bouillonnant, on utilise le catalyseur sous forme de bille ou d'extrudé. La forme "bille" permet une fluidisation du lit plus homogène et présente des propriétés de résistance à l'abrasion améliorées par rapport à la forme "extrudé". Le mouvement des billes est plus homogène et l'homogénéité des solides dans le lit permet d'atteindre un bon niveau de rétention en métaux en évitant des phénomènes de ségrégation dus à la gravité. La taillé de la bille est également ajustable en fonction de l'activité chimique désirée afin de minimiser les problèmes liés à la diffusion des molécules dans les pores du catalyseur. La captation en métaux est considérablement augmentée en lit bouillonnant par rapport au lit fixe.

De même, dans les procédés d'hydroraffinage de résidus en lit fixe, le catalyseur à structure poreuse "en bogue de châtaigne" ou "en oursins de mer" est moins performant (par rapport aux catalyseurs bimodaux) au niveau des performances initiales en ce qui concerne les fonctions HDAC7, HDM, HDCCR, bien qu'ils possèdent un fort pouvoir de rétention, nécessaire pour traiter des charges hydrocarbonées à fortes teneurs en métaux (Ni+V supérieur à 40 ppm, par exemple). L'utilisation de ce type de catalyseur est donc pénalisante pour les performances des catalyseurs d'HDS en aval qui sont, de fait, mal protégés des asphaltènes, du dépôt de métaux Ni+V et du coke.

Dans la demande de brevet FR 2 534 828, on décrit la préparation de catalyseurs contenant un ou plusieurs métaux des groupes V, VI et/ou VIII et un support de type alumine, silice ou silice-alumine, ledit support étant concassé mais lorsqu'une étape d'autoclavage est mise en oeuvre dans le procédé, le concassage est opéré systématiquement après celle-ci.

De manière surprenante, la demanderesse a découvert que des catalyseurs polymodaux à structure "en bogue de châtaigne" sous forme d'agglomérats à base d'alumine, majoritairement irréguliers et non sphériques, pouvaient être obtenus avec une résistance mécanique améliorée par rapport à ceux obtenus par le procédé de la demande de brevet FR 2 534 828 en modifiant la position de l'étape de concassage dans les étapes du procédé de préparation. Cet avantage important permet d'envisager la mise en oeuvre du catalyseur dans un réacteur en lit bouillonnant alors qu'elle serait impossible pour un catalyseur obtenu par le procédé de FR 2 534 828.

En parallèle à la tenue mécanique renforcée, les catalyseurs obtenus selon l'invention permettent d'avoir des performances optimales en terme d'activité HDAsC7, HDM, de stabilité et de capacité en rétention pour l'hydroconversion de charges hydrocarbonnées lourdes contenant des métaux.

## DESCRIPTION DE L'INVENTION

L'invention concerne un catalyseur utilisable pour l'hydroraffinage (hydrotraitement) et/ou l'hydroconversion en lit fixe ou en lit bouillonnant de charges hydrocarbonées lourdes contenant des métaux, présentant à la fois une activité améliorée, un pouvoir de rétention élevé , une grande stabilité des performances et une résistance mécanique importante.

Ledit catalyseur comprend un support poreux à base d'alumine présentant une structure poreuse "en bogue de châtaigne" ou en "oursin de mer" et se caractérisant par la forme irrégulière et non sphérique dudit support. Celui-ci se présente majoritairement sous la forme de fragments obtenus par concassage de billes d'alumine selon un procédé défini ci-après.

Plus précisément, l'invention concerne un catalyseur comprenant un support à base d'alumine, au moins un métal catalytique ou un composé de métal catalytique du groupe VIB et/ou VIII, dont la structure poreuse se compose d'une pluralité d'agglomérats juxtaposés et formés chacun d'une pluralité de plaquettes aciculaires, les plaquettes de chaque agglomérat étant orientées généralement radialement les unes vis à vis des autres et par rapport au centre de l'agglomérat, ledit support ayant une forme irrégulière et non sphérique et se présentant majoritairement sous forme de fragments obtenus par concassage de billes d'alumine, et préparé selon un procédé incluant les étapes suivantes:

    a) granulation à partir d'une poudre d'alumine active présentant une structure mal cristallisée et/ou amorphe, de façon à obtenir des agglomérats sous forme de billes;

    b) mûrissement en atmosphère humide entre 60 et 100°C puis séchage desdites billes;

    c) tamisage pour récupérer une fraction desdites billes;

    d) concassage de ladite fraction;

    e) calcination d'une partie au moins de ladite fraction concassée à une température comprise entre 250 et 900°C;

    f) imprégnation acide et traitement hydrothermal à une température comprise entre 80 et 250°C;

    g) séchage puis calcination à une température comprise entre 500 et 1100°C.

La granulométrie du support obtenu à l'issue du procédé est telle que le diamètre de la sphère circonscrite à au moins 80% poids desdits fragments après concassage est compris entre 0,05 et 3 mm. Dans le cas de l'utilisation du catalyseur en lit bouillonnant, ledit diamètre est de préférence entre 0,1 et 2 mm et, de manière très préférée, entre 0,3 et 1,5 mm. Dans le cas de l'utilisation du catalyseur en lit fixe, ledit diamètre est de préférence entre 1,0 et 2,0 mm.

La phase active dudit catalyseur contient au moins un métal catalytique ou un composé de métal catalytique du groupe VIB (groupe 6 de la nouvelle notation de la table périodique des éléments), de préférence le molybdène ou le tungstène, et/ou éventuellement au moins un métal catalytique ou un composé de métal catalytique du groupe VIII (groupe 8, 9 et 10 de la nouvelle notation de la table périodique des éléments), de préférence le nickel ou le cobalt. Le catalyseur peut renfermer en outre au moins un élément dopant choisi parmi le phosphore, le bore, le silicium et les halogènes (groupe VIIA ou groupe 17 de la nouvelle notation de la table périodique des éléments), de préférence le phosphore. Le silicium déposé sur le catalyseur, et considéré dès lors comme un élément dopant, est à distinguer du silicium qui peut être présent de manière endogène dans le support initial. Le silicium déposé est quantifiable par utilisation de la microsonde de Castaing.

De préférence, le catalyseur contient au moins un métal du groupe VIB (de préférence le molybdène) et éventuellement au moins un métal du groupe VIII non noble, de préférence le nickel. Un catalyseur préféré est de type Ni Mo P.

Sans vouloir être lié par une quelconque théorie, il semble que les propriétés améliorées du catalyseur de la présente invention soient dues à une diffusion améliorée des espèces à l'intérieur du grain du catalyseur de par l'association de la faible taille des grains ou fragments, leur forme spécifique conduisant à un ratio surface externe/votume du grain plus élevé et de la porosité "en bogue de châtaigne" ou "en oursins de mer".

La forme en "coin" des mésopores de la structure "en bogue de châtaigne" ou "en oursins de mer" compense ou supprime les gradients de concentration en réactifs qui s'établiraient normalement dans un pore cylindrique. La faible taille des grains de support et leur forme spécifique, irrégulière et non sphérique, favorisent l'entrée homogène des réactifs dans la macroporosité et sur chaque facette, sans colmatage des bouches de pores. Enfin, le libre parcours moyen ou diamètre effectif à l'intérieur d'un grain ou fragment est toujours inférieur au diamètre de la sphère circonscrite audit fragment, tandis qu'il est strictement identique au diamètre dans le cas des billes. Malgré la forme très irrégulière des grains ou fragments, il est toutefois possible de circonscrire une sphère à chacun d'entre eux et la taille du fragment est définie par le diamètre de la sphère circonscrite audit fragment.

A taille égale, la forme spécifique des grains ou fragments, irrégulière et non sphérique, favorise donc les phénomènes diffusionnels intragranulaires. Les fonctions d'hydrodémetallation (HDM) et d'hydroconversion des asphaltènes insolubles dans le n-heptane ($HDAC_7$) se trouvent augmentées.

La quantité de métal du groupe VIB, exprimée en % poids d'oxyde par rapport au poids du catalyseur final, est comprise entre 1 et 20 %, de préférence entre 5 et 15 %.

La quantité de métal du groupe VIII non noble, exprimée en % poids d'oxyde par rapport au poids du catalyseur final, peut être comprise entre 0 et 10 %, de préférence entre 1 et 4%.

La quantité de phosphore, exprimé en % poids d'oxyde par rapport au poids du catalyseur final, peut être comprise entre 0,3 et 10 %, de préférence entre 1 et 5 %, et de manière encore plus préférée entre 1,2 et 4 %.

La quantité de bore, exprimé en % poids d'oxyde par rapport au poids du catalyseur final, est inférieure à 6 %, de manière préférée inférieure à 2 %.

Le rapport atomique entre l'élément phosphore et l'élément du groupe VIB est avantageusement choisi entre 0,3 et 0,75.

Lorsqu'au moins un élément dopant est le silicium, la teneur en silicium est comprise entre 0.1 et 10% poids d'oxyde par rapport au poids de catalyseur final.

Lorsqu'au moins un élément dopant est un élément halogéné (groupe VIIA), la teneur en halogène est inférieure à 5% poids par rapport au poids de catalyseur final.

Préparation du support

Le support à base d'alumine présente une structure poreuse se composant d'une pluralité d'agglomérats juxtaposés et formés chacun d'une pluralité de plaquettes aciculaires, les plaquettes de chaque agglomérat étant orientées généralement radialement les unes vis à vis des autres et par rapport au centre de l'agglomérat, ledit support ayant une forme irrégulière et non sphérique et se présentant majoritairement sous forme de fragments obtenus par concassage de billes d'alumine, et préparé selon un procédé incluant les étapes suivantes:

    a) granulation à partir d'une poudre d'alumine active présentant une structure mal cristallisée et/ou amorphe, de façon à obtenir des agglomérats sous forme de billes;
    b) mûrissement en atmosphère humide entre 60 et 100°C puis séchage desdites billes;
    c) tamisage pour récupérer une fraction desdites billes;
    d) concassage de ladite fraction;
    e) calcination d'une partie au moins de ladite fraction concassée à une température comprise entre 250 et 900°C;
    f) imprégnation acide et traitement hydrothermal à une température comprise entre 80 et 250°C;
    g) séchage puis calcination à une température comprise entre 500 et 1100°C.

La granulométrie du support obtenu à l'issue du procédé est telle que diamètre de la sphère circonscrite à au moins 80% poids desdits fragments après concassage est compris entre 0,05 et 3 mm. Dans le cas de l'utilisation du catalyseur en lit bouillonnant, ledit diamètre est de préférence entre 0,1 et 2 mm et, de manière très préférée, entre 0,3 et 1,5 mm.

Dans le cas de l'utilisation du catalyseur en lit fixe, ledit diamètre est de préférence entre 1,0 et 2,0 mm.

    a) La première étape, dite de granulation, vise à former des agglomérats sensiblement sphériques à partir d'une poudre d'alumine active présentant une structure mal cristallisée et/ou amorphe, selon le procédé tel que décrit dans FR 1 438 497. Ce procédé consiste à humecter à l'aide d'une solution aqueuse l'alumine active présentant une structure mal cristallisée et/ou amorphe, puis à l'agglomérer dans un granulateur ou drageoir. De manière préférée, un ou plusieurs agents porogènes sont ajoutés lors de la granulation. Les agents porogènes que l'on peut utiliser sont notamment la farine de bois, le charbon de bois, la cellulose, les amidons, la naphtaline et, d'une manière générale tous les composés organiques susceptibles d'être éliminés par calcination.

On entend par alumine de structure mal cristallisée, une alumine telle que l'analyse aux rayons X donne un diagramme ne présentant qu'une ou quelques raies diffuses correspondant aux phases cristallines des alumines de transition basse température et comportant essentiellement les phases khi, rho, êta, gamma, pseudo-gamma et leurs mélanges. L'alumine active mise en oeuvre est généralement obtenue par déshydratation rapide des hydroxydes d'aluminium tels que la bayérite, l'hydrargillite ou gibbsite, la nordstrandite ou les oxyhydroxydes d'aluminium tels que la boehmite et le diaspore. Cette déshydratation peut être opérée dans n'importe quel appareillage approprié à l'aide d'un courant de gaz chaud. La température d'entrée des gaz dans l'appareillage varie généralement de 400 °C à 1200 °C environ et le temps de contact de l'hydroxyde ou de l'oxyhydroxyde avec les gaz chauds est généralement compris entre une fraction de seconde et 4 à 5 secondes.

La surface spécifique mesurée par la méthode BET de l'alumine active obtenue par déshydratation rapide d'hydroxydes ou d'oxyhydroxydes varie généralement entre environ 50 et 400 m2/g, le diamètre des particules est généralement compris entre 0,1 et 300 micromètres et de préférence entre 1 et 120 micromètres. La perte au feu mesurée par calcination à 1000 °C varie généralement entre 3 et 15 %, ce qui correspond à un rapport molaire $H_2O/Al_2O_3$ compris entre environ 0,17 et 0,85.

Selon un mode de mise en oeuvre particulier, on utilise de préférence une alumine active provenant de la déshydratation rapide de l'hydrate Bayer (hydrargillite) qui est l'hydroxyde d'aluminium industriel facilement accessible et très bon marché; une telle alumine active est bien connue de l'homme de l'art, son procédé de préparation a notamment été décrit dans FR 1 108 011.

L'alumine active mise en oeuvre peut être utilisée telle quelle ou après avoir été traitée de façon à ce que sa teneur en soude exprimée en $Na_2O$ soit inférieure à 1000 ppm poids. Par ailleurs, elle contient généralement entre 100 à 1000 ppm poids de silice endogène. L'alumine active mise en oeuvre peut avoir été broyée ou non.

b) On procède ensuite à un mûrissement des agglomérats sphériques obtenus en atmosphère humide à température peu élevée, de préférence comprise entre 60 et environ 100°C puis à un séchage généralement opéré entre 100 et 120°C.

c) A ce stade, les agglomérats sensiblement sous forme de billes ont une tenue mécanique suffisante pour être tamisés afin de sélectionner la plage granulométrique adaptée selon la granulométrie finale souhaitée. Ainsi, par exemple, pour obtenir un support final dans la plage de taille 0,7-1,4 mm, on tamisera et sélectionnera une fraction de billes dans la plage 1,4-2,8 mm; pour obtenir un support final dans la plage de taille 1-2 mm, on tamisera et sélectionnera une fraction de billes dans la plage 2-4 mm et enfin, pour obtenir un support final dans la plage de taille 2-3 mm, on tamisera et sélectionnera une fraction de billes dans la plage 4-6 mm .

d) Ensuite, la fraction de billes dans la plage de tailles sélectionnée est soumise à un concassage. Cette opération est réalisée dans tout type de concasseur connu de l'homme du métier et préférentiellement dans un broyeur à boulet. Elle a une durée comprise entre 5 et 60 minutes et de préférence entre 10 et 30 minutes.

A l'issue de l'étape de concassage, le support d'alumine se présente majoritairement sous la forme de fragments dont la forme est très irrégulière et non sphérique. Afin de mieux définir la forme obtenue, on peut préciser que les fragments peuvent se présenter sous la forme de billes cassées, sans toutefois avoir de faces de rupture très nettes, ou bien encore sous forme de solides dont la forme géométrique la plus voisine serait un polyèdre irrégulier ne présentant pas forcément de faces planes. Le terme "majoritairement" signifie qu'au moins 50% poids, et de préférence au moins 60% poids des agglomérats sphériques, ont effectivement subi une modification de leur forme lors du concassage, la partie complémentaire représentant les agglomérats sphériques étant restés intacts. En effet, il est bien connu que le concassage étant une opération rustique avec une faible efficacité, il est courant qu'une partie non négligeable des grains ne soient pas concassée.

Afin d'obtenir une résistance mécanique suffisante du catalyseur final, il est nécessaire que l'étape de concassage soit opérée préalablement à la calcination et au traitement hydrothermal (respectivement étapes e et f).

e) Après le concassage, une partie au moins des fragments est calcinée à une température comprise entre environ 250°C et environ 900°C, de préférence entre 500 et 850°C. La partie qui n'est pas calcinée correspond en général aux fines "hors cotes". De manière préférée, on calcine toute la fraction concassée.

f) On procède ensuite à une imprégnation acide sur le support suivie d'un traitement hydrothermal selon la méthode décrite dans US 4,552,650 qui peut être appliquée dans son ensemble pour le présent procédé:

- On traite les agglomérats concassés dans un milieu aqueux comprenant -de préférence constitué d'un mélange d'au moins un acide permettant de dissoudre au moins une partie de l'alumine du support, et au moins un composé apportant un anion capable de se combiner avec les ions aluminium en solution, ce dernier composé étant un individu chimique distinct de l'acide précité,

- On soumet simultanément ou subséquemment les agglomérats concassés ainsi traités à un traitement hydrothermal (ou autoclavage).

On entend par acide permettant de dissoudre au moins une partie de l'alumine du support, tout acide qui, mis en contact avec les agglomérats d'alumine active définis ci-dessus, réalise la mise en solution d'au moins une partie des ions aluminium. L'acide dissout au moins 0,5% et au plus 15% en poids de l'alumine des agglomérats. Sa concentration dans le milieu aqueux de traitement est inférieure à 20% en poids et de préférence comprise entre 1% et 15%.

On utilise de préférence les acides forts tels que l'acide nitrique, l'acide chlorhydrique, l'acide perchlorique, l'acide sulfurique ou des acides faibles comme l'acide acétique, mis en oeuvre à une concentration telle que leur solution aqueuse présente un pH inférieur à environ 4.

On entend par composé apportant un anion capable de se combiner avec les ions aluminium en solution, tout composé capable de libérer en solution un anion A(-n) susceptible de former avec les cations Al(3+) des produits dans lesquels le rapport atomique n(A/Al) est inférieur ou égal à 3.

Un cas particulier de ces composés peut être illustré par les sels basiques de formule générale Al2(OH)xAy dans laquelle 0 < x < 6 ; ny < 6 ; n représente le nombre de charges de l'anion A.

La concentration de ce composé dans le milieu aqueux de traitement est inférieure à 50% en poids et de préférence comprise entre 3% et 30%.

On utilise de préférence les composés capables de libérer en solution les anions choisis parmi le groupe constitué par les anions nitrate, chlorure, sulfate, perchlorate, chloroacétate, dichloracétate, trichloracétate, bromoacétate, dibromacétate, et les anions de formule générale $RCOO(-)$, dans laquelle R représente un radical pris dans le groupe comprenant H, $CH_3$, $C_2H_5$, $CH_3CH_2$, $(CH_3)_2CH$.

Les composés capables de libérer en solution l'anion A(-n) peuvent opérer cette libération, soit directement par exemple par dissociation, soit indirectement par exemple par hydrolyse. Les composés peuvent notamment être choisis parmi le groupe comportant: les acides minéraux ou organiques, les anhydrides, les sels organiques ou minéraux, les esters. Parmi les sels minéraux, on peut citer les sels alcalins ou alcalino-terreux solubles en milieu aqueux, comme ceux de sodium, de potassium, de magnésium ou de calcium, les sels d'ammonium, les sels d'aluminium, les sels de terres rares.

Ce premier traitement peut être effectué soit par imprégnation à sec des agglomérats, soit par immersion des agglomérats dans la solution aqueuse acide. Par imprégnation à sec, on entend mise en contact des agglomérats d'alumine avec un volume de solution inférieur ou égal au volume poreux total des agglomérats traités.

Selon un mode particulièrement préféré de mise en oeuvre, on utilise comme milieu aqueux des mélanges d'acide nitrique et acétique ou d'acide nitrique et formique.

Le traitement hydrothermal est opéré à une température comprise entre environ 80 et environ 250 °C, pendant une période de temps comprise entre environ 5 minutes et environ 36 heures.

Ce traitement hydrothermal n'entraîne aucune perte d'alumine.

On opère de préférence à une température comprise entre 120 et 220 °C pendant une période de temps comprise entre 15 minutes et 18 heures.

Ce traitement constitue un traitement hydrothermal des agglomérats d'alumine active qui réalise la transformation d'au moins une partie de celle-ci en boehmite. Ce traitement hydrothermal (autoclavage) peut être réalisé soit sous pression de vapeur saturante, soit sous une pression partielle de vapeur d'eau au moins égale à 70% de la pression de vapeur saturante correspondant à la température de traitement.

L'association d'un acide qui permet la dissolution d'au moins une partie de l'alumine et d'un anion qui permet la formation des produits décrits ci-dessus lors du traitement hydrothermal entraîne l'obtention d'une boehmite particulière, précurseur des plaquettes aciculaires du support de l'invention, dont la croissance procède radialement à partir de germes de cristallisation.

De plus, la concentration de l'acide et du composé dans le mélange de traitement et les conditions de traitement hydrothermal mises en oeuvre sont telles qu'il n'y a pas de perte d'alumine. L'augmentation de la porosité à la suite du traitement est donc due à une expansion des agglomérats au cours du traitement et non à une perte d'alumine.

g) Enfin, les agglomérats concassés sont ensuite éventuellement séchés à une température généralement comprise entre environ 100 et 200 °C pendant une période suffisante pour enlever l'eau qui n'est pas chimiquement liée. Les agglomérats sont ensuite soumis à une activation thermique à une température comprise entre environ 500 °C et environ 1100 °C pendant une période comprise entre environ 15 minutes et 24 heures.

Le support d'alumine active obtenu selon l'invention, majoritairement sous forme irrégulière et non sphérique, présente généralement les caractéristiques suivantes : la perte au feu mesurée par calcination à 1000 °C est comprise entre environ 1 et environ 15 % poids, la surface spécifique est comprise entre environ 80 et environ 300 m$^2$/g, leur volume poreux total est compris entre environ 0,45 et environ 1,5 cm$^3$/g

Les agglomérats concassés d'alumine active résultants présentent par ailleurs de manière préférée les caractéristiques suivantes :

- Une surface spécifique comprise entre 75 et 250 m²/g,
- Une densité de remplissage tassé comprise entre environ 0,35 et 0,80 g/cm³,
- Un volume poreux total ( VPT ) compris entre 0,5 et environ 2,0 cm³/g.
- Une distribution poreuse, déterminée par la technique de porosimétrie au Hg, caractérisée de préférence comme suit :

- % du volume poreux total en pores de diamètre moyen inférieur à 100Å: entre 0 et 10
- % du volume poreux total en pores de diamètre moyen compris entre 100 et 1000Å : entre 40 et 90
- % du volume poreux total en pores de diamètre moyen compris entre 1000 et 5000Å : entre 5 et 60
- % du volume poreux total en pores de diamètre moyen compris entre 5000 et 10000Å : entre 5 et 50
- % du volume poreux total en pores de diamètre moyen supérieur à 10000Å : entre 5 et 20.

Le procédé précité de préparation du support d'alumine permet notamment de modifier la répartition des volumes poreux suivant la taille des pores des agglomérats non traités. Il permet notamment d'augmenter la proportion des pores compris entre 100 et 1000Å, de réduire la proportion des pores inférieurs à 100 Å et de diminuer la proportion des pores supérieurs à 5000 Å en modifiant peu la proportion des pores compris entre 1000 et 5000 Å.
Les agglomérats d'alumine ainsi obtenus peuvent avoir été thermiquement stabilisés par les terres rares, la silice ou les métaux alcalino-terreux ainsi qu'il est bien connu de l'homme de l'art. En particulier, ils peuvent être stabilisés selon le procédé décrit dans le brevet américain numéro 4 061 594.

Dépôt de la phase active et du ou des éléments dopants sur le support obtenu

Le dépôt obtenu à l'issue de l'étape g) est imprégné avec au moins une solution d'au moins un métal catalytique et éventuellement au moins un dopant.
Le dépôt de la phase active à l'état oxyde et du ou des éléments dopants sur les agglomérats concassés d'alumine s'effectue de préférence par la méthode d'imprégnation dite "à sec" bien connue de l'homme du métier. L'imprégnation est effectuée de manière très préférée en une seule étape par une solution contenant l'ensemble des éléments constitutifs du catalyseur final (co-imprégnation). D'autres séquences d'imprégnation peuvent être mises en oeuvre pour obtenir le catalyseur de la présente invention.
Il est également possible d'introduire une partie des métaux, et une partie du ou des éléments dopants, voire la totalité, au cours de la préparation du support, notamment durant l'étape de granulation.
Les sources des éléments du groupe VIB qui peuvent être utilisées sont bien connues de l'homme du métier. Par exemple, parmi les sources de molybdène et de tungstène, on peut avantageusement utiliser les oxydes, les hydroxydes, les acides molybdiques et tungstiques et leurs sels en particulier les sels d'ammonium tels que le molybdate d'ammonium, l'heptamolybdate d'ammonium, le tungstate d'ammonium, les acides phosphomolybdique et phosphotungstique et leurs sels, les acétylacétonates, les xanthates, les fluorures, les chlorures, les bromures, les iodures, les oxyfluorures, les oxychlorures, les oxybromures, les oxyiodures, les complexes carbonyles, les thiomolybdates, les carboxylates. On utilise de préférence les oxydes et les sels d'ammonium tels que le molybdate d'ammonium, l'heptamolybdate d'ammonium et le tungstate d'ammonium.
Les sources des éléments du groupe VIII pouvant être utilisées sont connues et sont par exemple les nitrates, les sulfates, les phosphates, les halogénures, les carboxylates comme les acétates et les carbonates, les hydroxydes et les oxydes.
La source de phosphore préférée est l'acide orthophosphorique, mais ses sels et esters comme les phosphates alcalins, phosphates d'ammonium, les phosphates de gallium ou les phosphates d'alkyles conviennent également. Les acides phosphoreux, par exemple l'acide hypophosphoreux, l'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniaque , les amines primaires et secondaires, les amines cycliques, les composés de la famille de la pyridine et des quinoléines et les composés de la famille du pyrrole.
La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/éthanolamine.
De nombreuses sources de silicium peuvent être employées. Ainsi, on peut utiliser l'orthosilicate d'éthyle Si $(OEt)_4$, les siloxanes, les silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool.

Les sources d'élément du groupe VIIA (halogènes) qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

De manière avantageuse, après ladite imprégnation du support, le procédé de préparation du catalyseur de la présente invention comprend les étapes suivantes :

- on laisse reposer le solide humide sous une atmosphère humide à une température comprise entre 10 et 80°C,

- on sèche le solide humide obtenu à une température comprise entre 60 et 150°C,

- on calcine le solide obtenu après séchage à une température comprise entre 150 et 800°C.

La calcination n'est pas nécessaire dans le cas où les solutions d'imprégnation sont exemptes de composés contenant l'élément azote.

**Caractéristiques du catalyseur**

La distribution poreuse du catalyseur, déterminée par la technique de porosité au mercure, est la suivante:

- % du volume poreux total en pores de diamètre moyen inférieur à 100Å : entre 0 et 10
- % du volume poreux total en pores de diamètre moyen compris entre 100 et 1000Å : entre 40 et 90
- % du volume poreux total en pores de diamètre moyen compris entre 1000 et 5000Å : entre 5 et 60
- % du volume poreux total en pores de diamètre moyen compris entre 5000 et 10000Å : entre 5 et 50
- % du volume poreux total en pores de diamètre moyen supérieur à 10000Å : entre 5 et 20.

Le volume poreux total des catalyseurs selon l'invention déterminé par porosité au mercure est compris entre 0,4 et 1,8 g/cm3.

De manière préférée, la densité de remplissage tassé des catalyseurs selon l'invention est comprise entre 0,35 et 0,80 g/cm3.

De manière préférée, dans les catalyseurs selon la présente invention, le diamètre des pores à VHg/2 est compris entre 300 et 700 Å, c'est à dire que le diamètre moyen des pores, dont le volume sur la représentation graphique de la répartition poreuse correspond à la moitié du volume poreux total, est compris entre 300 et 700 Å, soit 30 à 70 nm.

Les catalyseurs selon l'invention présentent une surface spécifique mesurée par la méthode B.E.T. comprise entre 50 et 250 m$^2$/g.

Pour une mise en oeuvre du catalyseur selon l'invention en lit bouillonnant, la résistance mécanique du catalyseur est déterminante et est mesurée en déterminant le pourcentage de fines (particules passant au travers d'un tamis de 850 $\mu$m) produites lorsque le catalyseur est mis en rotation pendant une durée donnée dans un cylindre muni d'une chicane. A l'issue du test, le solide obtenu est tamisé et les fines sont pesées. La perte par attrition est quantifiée selon la norme ASTM D4058-96.

Les pertes par attrition sont alors calculées par la formule suivante :

% perte par attrition = 100 (1 - poids de catalyseur de taille supérieure à 850 $\mu$m après test/poids de catalyseur de taille supérieure à 850 $\mu$m chargé dans le cylindre).

Il est communément admis par l' Homme du métier, qu' un catalyseur n'est utilisable en réacteur à lit bouillonnant que si la perte par attrition mesurée par cette méthode est inférieure à 5% poids.

Pour les catalyseurs selon l'invention, la perte par attrition quantifiée selon la norme ASTM D4058-96 est inférieure à 5% poids, et préférentiellement inférieure ou égale à 2% poids.

Pour une mise en oeuvre du catalyseur selon l'invention en lit fixe, la résistance mécanique est déterminée par mesure de la résistance à l'écrasement par la méthode Shell (ESH) qui consiste à soumettre une certaine quantité de particules et à récupérer les fines générées. La résistance à l'écrasement correspond à la force exercé pour obtenir un taux de fines (les fines étant les particules passant au travers d'un tamis de 425 $\mu$m) représentant 0,5% de la masse des particules soumises au test. La méthode utilisée, communément appelée Méthode Shell porte la référence "Shell Method Series SMS1471-74" et est mise en oeuvre grâce à un appareil d'écrasement en lit commercialisé par la société Vinci Technologie sous la référence "Bulk crushing strength - Méthode Shell-SMS".

Généralement, un catalyseur est utilisable en lit fixe à condition que sa résistance à l'écrasement Shell soit supérieure à 1,0 MPa.

Pour les catalyseurs selon l'invention, la résistance à l'écrasement mesurée par la méthode Shell est supérieure à 1,0 MPa, et de préférence supérieure ou égale à 1,5 MPa.

L'invention concerne également le procédé de préparation du catalyseur incluant le procédé de préparation du support suivi de l'imprégnation du support par au moins une solution d'au moins un métal catalytique et éventuellement d'un dopant.

Utilisation du catalyseur selon l'invention pour l'hydroconversion/hydrocraquage /hydrotraitement de charges hydrocarbonées en lit bouillonnant

Les catalyseurs selon l'invention peuvent être mis en oeuvre dans un réacteur à lit bouillonnant seuls ou en partie sous forme de fragments et en partie sous forme de billes telles que décrites dans le brevet US 4,552,650 ou sous forme d'extrudés cylindriques.

Les charges peuvent être par exemple des résidus atmosphériques ou des résidus sous vide issus de distillation directe, des huiles désasphaltées, des résidus issus de procédés de conversion tels que par exemple ceux provenant du coking, d'une hydroconversion en lit fixe, en lit bouillonnant ou encore en lit mobile. Ces charges peuvent être utilisées telles quelles ou encore diluées par une fraction hydrocarbonée ou un mélange de fractions hydrocarbonées pouvant être choisies par exemple dans les produits issu du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommée selon la terminologie anglo-saxonne VGO (Vacuum Gas Oil). Les charges lourdes peuvent ainsi comprendre des coupes issues du procédé de liquéfaction charbon, des extraits aromatiques, ou toutes autres coupes hydrocarbonés.

Les charges lourdes présentent généralement des points d'ébullition initiaux supérieurs à 300°C, plus de 1 % poids de molécules ayant un point d'ébullition supérieur à 500°C, une teneur en métaux Ni+V supérieure à 1 ppm poids, une teneur en asphaltènes, précipités dans l'heptane, supérieure à 0.05 %.

Dans un mode de réalisation, une partie des effluents convertis peut être recyclée en amont de l'unité opérant le procédé d'hydroconversion / hydrotraitement.

Les charges lourdes peuvent être mélangées avec du charbon sous forme de poudre, ce mélange est généralement appelé slurry. Ces charges peuvent être des sous produits issus de la conversion du charbon et re-mélangées à du charbon frais. La teneur en charbon dans la charge lourde représente généralement et de préférence 0.25 en poids (charbon/charge) et peut varier largement entre 0.1 et 1. Le charbon peut contenir de la lignite, être un charbon sub-bitumineux (selon la terminologie anglo-saxonne), ou encore bitumineux. Tout type de charbon convient pour l'utilisation de l'invention, à la fois dans un premier réacteur ou dans tous les réacteurs fonctionnant en lit bouillonnant.

Dans un tel procédé, le catalyseur est généralement mis en oeuvre à une température comprise entre 320 et 470°C, de préférence 400 à 450°C, sous une pression partielle d'hydrogène d'environ 3 MPa à environ 30 MPa, de préférence 10 à 20 MPa, à une vitesse spatiale d'environ 0,1 à 10 volumes de charge par volume de catalyseur et par heure, de préférence 0,5 à 2 volumes de charge par volume de catalyseur et par heure, et avec un rapport hydrogène gazeux sur charge liquide d'hydrocarbures compris entre 100 et 3000 normaux mètres cubes par mètre cube, de préférence 200 à 1200 normaux mètres cubes par mètre cube.

Pour l'hydroconversion des résidus, un cas particulier d'application du catalyseur selon l'invention est l'utilisation du catalyseur en présence de charbon mélangé à la charge lourde à convertir. Comme décrit dans les brevets US 4874506 et US 4437973, le charbon sous forme de poudre est mélangé à une charge hydrocarbonée plus riche en hydrogène pour être converti en présence d'hydrogène et d'un catalyseur supporté. Cette opération est généralement réalisée dans un ou plusieurs réacteurs en série fonctionnant en lit bouillonnant. L'utilisation du catalyseur selon l'invention permettrait d'améliorer le comportement hydrodynamique du système ainsi que la facilité du soutirage en continu du catalyseur. A titre d'exemple, la conversion du charbon en liquide est assurée par le premier réacteur et ensuite l'HDM et la captation des impuretés est réalisée en même temps et ensuite une étape de finition peut être réalisée en utilisant d'autres catalyseurs.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Procédé d'hydroconversion/hydrocraquage /hydrotraitement de charges hydrocarbonées en lit fixe

Les catalyseurs tels que décrits précédemment peuvent également être mis en oeuvre dans un réacteur à lit fixe, seuls ou en partie sous forme de fragments et en partie sous forme de billes telles que décrites dans le brevet US 4,552,650 ou sous forme d'extrudés cylindriques.

Les charges peuvent être par exemple des résidus atmosphériques ou des résidus sous vide issus de distillation directe, des huiles désasphaltées, des résidus issus de procédés de conversion tels que par exemple ceux provenant du coking, d'une hydroconversion en lit fixe, en lit bouillonnant ou encore en lit mobile. Ces charges peuvent être utilisées telles quelles ou encore diluées par une fraction hydrocarbonée ou un mélange de fractions hydrocarbonées pouvant être choisies par exemple dans les produits issu du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommée selon la terminologie anglo-saxonne VGO (Vacuum Gas Oil). Les charges lourdes peuvent ainsi comprendre des coupes issues du procédé de liquéfaction charbon, des extraits aromatiques, ou toutes autres coupes hydrocarbonées.

Les charges lourdes présentent généralement des points d'ébullition initiaux supérieurs à 300°C, plus de 1 % poids de molécules ayant un point d'ébullition supérieur à 500°C, une teneur en métaux Ni+V supérieure à 1 ppm poids, une teneur en asphaltènes, précipités dans l'heptane, supérieure à 0.05 %.

Dans un mode de réalisation, une partie des effluents convertis peut être recyclée en amont de l'unité opérant le procédé d'hydroconversion / hydrotraitement.

Dans un tel procédé, le catalyseur est généralement mis en oeuvre à une température comprise entre 320 et 450°C, de préférence 350 à 410°C, sous une pression partielle d'hydrogène d'environ 3 MPa à environ 30 MPa, de préférence 10 à 20 MPa, à une vitesse spatiale d'environ 0.05 à 5 volumes de charge par volume de catalyseur et par heure, de préférence 0,2 à 0,5 volume de charge par volume de catalyseur et par heure, et avec un rapport hydrogène gazeux sur charge liquide d'hydrocarbures compris entre 200 et 5000 normaux mètres cubes par mètre cube, de préférence 500 à 1500 normaux mètres cubes par mètre cube.

Les catalyseurs mis en oeuvre dans la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'hydrogène et d'hydrocarbures contenant des molécules soufrées à une température comprise entre 150 et 800°C, de préférence entre 250 et 600°C, généralement dans une zone réactionnelle à lit traversé.

Les exemples suivants illustrent l'invention décrite dans ce brevet sans toutefois en limiter la portée.

**Exemple 1: Préparation d'agglomérats d'alumine concassés selon l'invention**

La matière première est de l'alumine obtenue par décomposition très rapide de l'hydrargillite dans un courant d'air chaud (T = 1000°C). Le produit obtenu est constitué d'un mélange d'alumines de transition : alumines (khi) et (rho). La surface spécifique de ce produit est de 300 $m^2$/g et la perte au feu (PAF) de 5 %.

L'alumine se présente (après broyage) sous forme d'une poudre dont le diamètre moyen des particules est de 7 micromètres.

Cette alumine est mélangée avec de la farine de bois comme porogène (15% en poids), puis mise en forme dans un granulateur ou drageoir pendant un temps adapté à la granulométrie désirée. Les agglomérats obtenus sont soumis à une étape de mûrissement par passage de vapeur d'eau à 100°C pendant 24 heures puis séchés. Ils sont ensuite tamisés puis concassés et enfin calcinés.

Ces billes sont ensuite imprégnées à sec par une solution contenant par exemple un mélange d'acide nitrique et d'acide acétique en phase aqueuse dans un tonneau imprégnateur. Une fois imprégnées, elles sont introduites dans un autoclave pendant 2 heures environ, à une température de 210 °C sous une pression de 20,5 bar.

En sortie d'autoclave, on obtient des agglomérats concassés d'alumine selon l'invention qui sont séchés pendant 4 heures à 100°C et calcinés pendant 2 heures à 650°C.

Les agglomérats ont une taille comprise entre 1 et 1.5 mm. Leur volume poreux est égal à 0.95 cm$^3$/g avec une distribution poreuse multimodale. La surface spécifique du support est de 130 m$^2$/g.

**Exemple 2: Préparation de billes d'alumine (non conformes à l'invention)**

Un catalyseur est préparé sous formes de billes selon le mode opératoire de l'exemple 1 à l'exception de l'étape de concassage.

Les billes de granulométrie comprise entre 1,4 et 2,8 mm sont sélectionnées.

**Exemple 3 : Préparation d'agglomérats d'alumine concassés selon l'invention**

Le support de cet exemple est préparé de la même façon que celui de l'exemple 1, mais les temps de granulation et les étapes de tamisage-concassage sont modifiées de manière à obtenir des agglomérats de taille comprise entre 1,4 et 2,8 mm.

**Exemple 4 : Préparation d'agglomérats d'alumine (non conformes à l'invention)**

Un catalyseur est préparé sous formes de billes selon le mode opératoire de l'exemple 1 à l'exception de l'étape de concassage qui est opérée après l'autoclavage.
En sortie d'autoclave, après les étapes de séchage (4h, 100°C) et de calcination (2h, 650°C), les billes sont concassées de manière à obtenir une fraction 1.4-2.8 mm.

**Exemple 5 : Préparation des catalyseurs A, B, C et D à partir des supports des exemples 1, 2 , 3, 4.**

Nous avons imprégné à sec les supports des exemples 1, 2, 3, 4 par une solution aqueuse renfermant des sels de molybdène et de nickel et de l'acide phosphorique. Le précurseur de molybdène est l'oxyde de molybdène $MoO_3$ et celui de nickel est le carbonate de nickel $Ni(CO_3)$. Après maturation à température ambiante dans une atmosphère saturée en eau, les supports imprégnés sont séchés pendant une nuit à 120°C puis calcinés à 500°C pendant 2 heures sous air sec. La teneur finale en trioxyde de molybdène est de 9,4 % poids du catalyseur fini. La teneur finale en oxyde de nickel NiO est de 2 % poids du catalyseur fini. La teneur finale en oxyde de phosphore $P_2O_5$ est de 2 % poids du catalyseur fini.
Les caractéristiques texturales et physico-chimiques des catalyseurs A, B, C et D issus respectivement des supports des exemples 1,2, 3 et 4 sont reportées dans le tableau 1.

Tableau 1

| Catalyseur | A | B | C | D |
|---|---|---|---|---|
| $MoO_3$ (% pds) | 9,4 | 9,4 | 9,4 | 9.4 |
| NiO (% pds) | 2,0 | 2,0 | 2,0 | 2,0 |
| $P_2O_5$ (% pds) | 2,0 | 2,0 | 2,0 | 2,0 |
| $SiO_2$ (% pds) | - | - | - | |
| Ni/Mo (at/at) | 0,40 | 0,40 | 0,40 | 0,40 |
| P/Mo (at/at) | 0,42 | 0,42 | 0,42 | 0,42 |
| dMo (at/nm$^2$) | 3,8 | 3,8 | 3,8 | 3,8 |
| DRT (g/cm3) | 0.55 | 0,52 | 0.51 | 0.52 |
| $S_{BET}$ (m$^2$/g) | 97 | 105 | 103 | 100 |
| VPT Hg (cm$^3$/g) | 0.80 | 0,95 | 0.90 | 0.90 |
| dp à VHg/2 (Å) | 350 | 380 | 370 | 370 |
| V Hg > 500 Å (cm$^3$/g) | 0.35 | 0,44 | 0.40 | 0.40 |
| V Hg > 1000 Å (cm$^3$/g) | 0.26 | 0,30 | 0.28 | 0.28 |

**Exemple 6: Comparaison des résistances mécaniques en attrition des catalyseurs A, B, C, D pour une utilisation en lit bouillonnant**

La résistance mécanique vis à vis de l'attrition des catalyseurs A, B, C et D a été déterminée selon la méthode présentée dans la description.
Le tableau 2 ci-dessous présente les résultats obtenus pour les catalyseurs A, B, C, D.

| Catalyseur | A | B | C | D |
|---|---|---|---|---|
| % fines produites après attrition (poids) | 1.5% | 2% | 2% | 12% |

Le catalyseur D n'est donc pas utilisable en lit bouillonnant car le taux de fines générées à l'issue du test d'attrition est bien supérieur à 5% poids.

**Exemple 7: Comparaison des performances en hydroconversion de résidu en lit bouillonnant.**

Les performances des catalyseurs A (selon l'invention), B (non conforme) et C (selon l'invention) ont été comparées au cours d'un test pilote dans une unité pilote comportant un réacteur tubulaire équipé d'un dispositif permettant le maintien en ébullition permanent du catalyseur à l'intérieur du réacteur. L'unité pilote mise en oeuvre est représentative d'une unité industrielle H-OIL ®d' hydroconversion de résidus en lit bouillonnant décrite dans de nombreux brevets, par exemple US 4521295 et US 4495060.
On charge le réacteur du pilote avec 1 litre de catalyseur.
La mise en huile de l'unité est réalisée en utilisant un Gasoil issu de distillation sous vide, ou DSV, dont les caractéristiques sont reportées dans le tableau 3.

Tableau 3

| Charge | DSV | RSV SAFANIYA | RA BOSCAN |
|---|---|---|---|
| Spec. grav. | 0,9414 | 1,0457 | **1,023** |
| Soufre (% poids) | 2,92 | 5,31 | **5,5** |
| Azote (ppm pds) | 1357 | 4600 | **5800** |
| Viscosité (cSt) | 13,77 | 5110 | **1380** |
| Temp. viscosité (°C) | 100 | 100 | **100** |
| Viscosité (cSt) | 38,64 | 285 | **120** |
| Temp. viscosité (°C) | 70 | 150 | **150** |
| C. Conradson (% poids) | | 23,95 | **16.9** |
| Asphalt. C7 (% poids) | | 14,5 | **14.0** |
| Ni (ppm pds) | <2 | 52 | **125** |
| V (ppm pds) | 3,3 | 166 | **1290** |
| D1160 : PI °C | 361 | 496 | **224** |
| D1160 : 05 % vol. °C | 416 | 536 | **335** |
| D1160 : 10 % vol. °C | 431 | 558 | **402** |
| D1160 : 20 % vol. °C | 452 | | **474** |
| D1160 : 30 % vol. °C | 467 | | **523** |
| D1160 : 40 % vol. °C | 479 | | **566** |
| D1160 : 50 % vol. °C | 493 | | |
| D1160 : 60 % vol. °C | 507 | | |
| D1160 : 70 % vol. °C | 522 | | |

(suite)

| Charge | DSV | RSV SAFANIYA | **RA BOSCAN** |
|---|---|---|---|
| D1160 : 80 % vol. °C | 542 | | |
| D1160 : 90 % vol. °C | 568 | | |
| D1160 : 95 % vol. °C | 589 | | |
| D1160 : PF °C | 598 | 558 | **566** |

La température est augmentée jusqu'à 343°C puis la charge de test, un résidu de distillation sous vide de type Safaniya (RSV), est injectée. La température de réaction est ensuite élevée à 410°C. Le débit d'hydrogène est de 600 l/l, la vitesse spatiale est de 0.3 l/l/h.

Les conditions de l'essai sont fixées en isotherme, ce qui permet de mesurer la désactivation du catalyseur par la comparaison directe des performances à différents âges. Les âges sont exprimés ici en $m^3$ de charge / kg de catalyseur ($m^3$/kg) ce qui représente la quantité cumulée de charge passée sur le catalyseur rapportée au poids de catalyseur chargé. Les performances en conversion, HDM sont définies de la façon suivante :

$$\text{Conversion (\%pds)} = ((\text{\%pds de } 550°C+)\text{charge} - (\text{\%pds } 550°C+)\text{recette}) / ((\text{\%pds } 550°C+)\text{charge}) * 100$$

$$\text{HDM (\% pds)} = ((\text{ppm pds Ni+V})\text{charge} - (\text{ppm pds Ni+V})\text{recette}) / ((\text{ppm pds Ni+V})\text{charge}) * 100$$

On procède ensuite au changement de charge par passage sur résidu atmosphérique Boscan. Cette charge permet d'évaluer la rétention en métaux du catalyseur. La conduite du test vise à maintenir un taux d'HDM compris entre 80 et 60 %. Pour cela, on maintient la température réactionnelle à 410°C. On arrête le test lorsque le taux d'HDM chute en dessous de 60 %. La conversion est maintenue entre 50 et 60 % pds afin d'obtenir une bonne stabilité du fuel. Pour évaluer la stabilité des produits formés, une mesure selon la méthode « P value Shell » est effectuée sur la fraction 350°C + de l'effluent récupéré après test.

Le tableau 4 compare la performance des catalyseurs A, B et C en début de test (0,56 $m^3$/kg) ainsi qu'en fin de test (1,44 $m^3$/kg).

Le catalyseur D n'a pas pu être évalué, même en terme d'activité initiale car la production de fines de bout du 2eme jour de test (Age < 0,17 $m^3$/kg) a conduit à des problèmes opératoires (bouchage, apparition de gradients de pression) et à l'arrêt de l'unité.

Tableau 4

| Catalyseur + Age | Conv (%pds) | HDM (% pds) | Rétention en métaux (% pds) | P value Shell |
|---|---|---|---|---|
| A à 0,56 $m^3$/kg, RSV Saf | 55 | 72 | 9.5 | 1.6 |
| B à 0,56 $m^3$/kg RSV Saf | 54 | 55 | 8.1 | 1.4 |
| C à 0,56 $m^3$/kg, RSV Saf | 54 | 65 | 8.7 | 1.5 |
| A à 1,44 $m^3$/kg RA Boscan | 55 | 80 | 120 | 1.4 |
| B à 1,44 $m^3$/kg RA Boscan | 56 | 70 | 100 | 1.2 |
| C à 1,44 $m^3$/kg RA Boscan | 55 | 78 | 115 | 1.3 |

Les catalyseurs d'HDM supportés sur agglomérats concassés selon l'invention présentent des propriétés d'HDM initiales améliorées et une stabilité plus grande. Les performances en HDM sont d'autant plus élevées que la

taille des agglomérats est faible.

## Exemple 8: Comparaison des résistances mécaniques en lit fixe des catalyseurs A, B, C, D

Le tableau 5 ci-dessous présente les résultats obtenus pour les mesures d'écrasement en lit fixe opérées selon la méthode décrite dans la description pour les catalyseurs A, B, C, D.

| Catalyseur | A | B | C | D |
|---|---|---|---|---|
| Pression exercée pour 0.5% poids de fines | 1.8 MPa | 1.7 MPa | 1.7 MPa | 0.8 MPa |

La valeur de résistance à l'écrasement Shell pour le catalyseur D n'est pas compatible avec une utilisation dans un procédé d'hydroconversion des résidus en lit fixe, cette valeur étant inférieure à 1 MPa.

Exemple 9: Comparaison des performances en hydroconversion de résidu en lit fixe pour les catalyseurs A, B et C.

Les performances des catalyseurs A (conforme), B (non conforme) et C (conforme) précédemment décrits ont été comparées au cours d'un test pilote en lit fixe d'hydrotraitement de différents résidus pétroliers. On traite en premier lieu un résidu atmosphérique (RA) d'origine Moyen Orient (Arabian Light) puis un résidu atmosphérique de brut extra lourd vénézuélien (Boscan). Ces deux résidus sont caractérisés par des viscosités élevées, des fortes teneurs en carbone Conradson et asphaltènes. Le RA Boscan contient de plus des teneurs très élevées en nickel et vanadium.
Les caractéristiques de ces résidus sont reportées dans le tableau 6 :

Tableau 6

| | | RA Arabian Light | RA Boscan |
|---|---|---|---|
| **Densité 15/4** | | **0,9712** | **1,023** |
| **Viscosité à 100 °C** | **mm²/s** | **161** | **1380** |
| **Viscosité à 150 °C** | **mm²/s** | **45** | **120** |
| **Soufre** | **% pds** | **3,38** | **5,5** |
| **Azote** | **ppm** | **2257** | **5800** |
| **Nickel** | **ppm** | **12** | **125** |
| **Vanadium** | **ppm** | **41** | **1290** |
| **Fer** | **ppm** | **1** | **8** |
| **Carbone** | **% pds** | **84,8** | **83,40** |
| **Hydrogène** | **% pds** | **11,1** | **10,02** |
| **Carbone aromatique** | **%** | **24,8** | **29,0** |
| **Masse moléculaire** | **g/mol** | **528** | **730** |
| **Carbone Conradson** | **% pds** | **10,2** | **16,9** |
| **Asphaltènes C5** | **% pds** | **6,4** | **24,1** |
| **Asphaltènes C7** | **% pds** | **3,4** | **14,9** |
| **SARA** | **% pds** | | |
| **Saturés** | **% pds** | **28,1** | **8,7** |
| **Aromatiques** | **% pds** | **46,9** | **35,0** |
| **Résines** | **% pds** | **20,1** | **34,0** |
| **Asphaltènes** | **% pds** | **3,5** | **14,6** |
| **Distillation simulée** | | | |
| **PI** | **°C** | **296** | **224** |
| **5%** | **°C** | **400** | **335** |
| **10%** | **°C** | **422** | **402** |
| **20%** | **°C** | **451** | **474** |
| **30%** | **°C** | **474** | **523** |
| **40%** | **°C** | **502** | **566** |
| **50%** | **°C** | **536** | |

(suite)

| | | RA Arabian Light | RA Boscan |
|---|---|---|---|
| 60% | °C | 571 | |
| 70% | °C | | |
| 80% | °C | | |
| 90% | | | |
| 95% | | | |
| PF | °C | 571 | 566 |

Les tests ont été menés dans une unité pilote d'hydrotraitement comportant un réacteur tubulaire en lit fixe. Le réacteur est rempli avec 1 litre de catalyseur. L'écoulement des fluides (résidu + hydrogène) est ascendant dans le réacteur. Ce type d'unité pilote est représentatif du fonctionnement de l'un des réacteurs de l'unité HYVAHL de l'IFP d'hydroconversion de résidus en lits fixes.

Après une étape de sulfuration par circulation dans le réacteur d'une coupe gazole additionnée de diméthyl disulfure à une température finale de 350°C, on opère l'unité pendant 300 heures avec le Résidu Atmosphérique Arabian Light à 370°C, 150 bars de pression totale utilisant une VVH de 0,5 l charge/l cata/h. Le débit d'hydrogène est tel qu'il respecte le rapport 1000 l/l de charge. Les conditions de l'essai sur RAAL sont fixées en isotherme, ce qui permet de mesurer la désactivation initiale du catalyseur par la comparaison directe des performances à différents âges. Les âges sont exprimés en heures de fonctionnement sous résidu atmosphérique Arabian Light, le temps zéro étant pris dès l'arrivée à la température du test (370°C).

Les performances HDM, HDAsC7 et HDCCR sont définies de la façon suivante :

$$\text{HDM (\% pds)} = ((\text{ppm pds Ni+V})\text{charge} - (\text{ppm pds Ni+V})\text{recette})/((\text{ppm pds Ni+V})\text{charge}) * 100$$

$$\text{HDAsC7 (\% pds)} = ((\text{\% pds Asphaltènes insolubles dans le n-heptane})\text{charge} - (\text{\% pds Asphaltènes insolubles dans le n-heptane})\text{recette})/((\text{\% pds Asphaltènes insolubles dans le n-heptane})\text{charge}) * 100$$

$$\text{HDCCR (\% pds)} = ((\text{\% pds CCR})\text{charge} - (\text{\% pds CCR})\text{recette})/((\text{\% pds CCR})\text{charge}) * 100$$

Le tableau 7 compare les performances HDM, HDAsC7 et HDCCR des catalyseurs A, B et C en début de test (50 heures) ainsi qu'en fin de test (300 heures).

Tableau 7

| Catalyseur + Age | HDM (% pds) | HDAsC7 (%pds) | HDCCR (% pds) |
|---|---|---|---|
| A à 50 heures | 90 | 91 | 50 |
| B à 50 heures | 83 | 85 | 40 |
| C à 50 heures | 87 | 88 | 46 |

(suite)

| Catalyseur + Age | HDM (% pds) | HDAsC7 (%pds) | HDCCR (% pds) |
|---|---|---|---|
| A à 300 heures | 85 | 86 | 44 |
| B à 300 heures | 74 | 75 | 32 |
| C à 300 heures | 83 | 83 | 39 |

On procède ensuite au changement de charge par passage sur résidu atmosphérique Boscan. La conduite du test vise à maintenir un taux d'HDM constant autour de 80% poids tout au long du cycle. Pour cela, on compense la désactivation du catalyseur par une augmentation progressive de la température réactionnelle. On arrête le test lorsque la température réactionnelle atteint 420°C, température considérée comme représentative de la température de fin de cycle d'une unité industrielle d'hydroraffinage de résidus.

Le tableau 8 compare les quantités de nickel+vanadium en provenance du RA de Boscan déposés sur les 3 catalyseurs.

Tableau 8

| Catalyseur | Ni+V déposés (% de la masse de catalyseur frais) |
|---|---|
| Catalyseur A | 97 |
| Catalyseur B | 85 |
| Catalyseur C | 91 |

Il apparaît que les catalyseurs d'HDM supportés sur des agglomérats selon l'invention conduisent à des performances initiales sur RAAL et en rétention sur RAB supérieures à celles du catalyseur supporté sur billes; les gains en performances et en rétention étant d'autant plus importants que les agglomérats sont de faible taille.

**Revendications**

1. Catalyseur comprenant un support à base d'alumine, au moins un métal catalytique ou un composé de métal catalytique du groupe VIB et/ou VIII, dont la structure poreuse se compose d'une pluralité d'agglomérats juxtaposés et formés chacun d'une pluralité de plaquettes aciculaires, les plaquettes de chaque agglomérat étant orientées généralement radialement les unes vis à vis des autres et par rapport au centre de l'agglomérat, ledit support ayant une forme irrégulière et non sphérique et se présentant majoritairement sous forme de fragments obtenus par concassage de billes d'alumine, et préparé selon un procédé incluant les étapes suivantes:

   a) granulation à partir d'une poudre d'alumine active présentant une structure mal cristallisée et/ou amorphe, de façon à obtenir des agglomérats sous forme de billes;
   b) mûrissement en atmosphère humide entre 60 et 100°C puis séchage desdites billes;
   c) tamisage pour récupérer une fraction desdites billes;
   d) concassage de ladite fraction;
   e) calcination d'une partie au moins de ladite fraction concassée à une température comprise entre 250 et 900°C;
   f) imprégnation acide et traitement hydrothermal à une température comprise entre 80 et 250°C;
   g) séchage puis calcination à une température comprise entre 500 et 1100°C.

2. Catalyseur selon la revendication 1 pour lequel la perte par attrition quantifiée selon la norme ASTM D4058-96 est inférieure à 5% poids.

3. Catalyseur selon la revendication 2 pour lequel la perte par attrition quantifiée selon la norme ASTM D4058-96 est inférieure à 2% poids.

4. Catalyseur selon la revendication 1 pour lequel la résistance à l'écrasement mesurée par la méthode Shell suivant la norme SMS 1471-74 est supérieure ou égale à 1,5 MPa.

5. Catalyseur selon la revendication 1 pour lequel l'étape a) de granulation met en oeuvre au moins un agent porogène.

**6.** Catalyseur selon l'une des revendications précédentes comprenant au moins un métal catalytique ou un composé de métal catalytique du groupe VIB.

**7.** Catalyseur selon l'une des revendications précédentes comprenant au moins un métal catalytique ou un composé de métal catalytique du groupe VIII (colonnes 8, 9 et 10 de la nouvelle notation de la table périodique des éléments).

**8.** Catalyseur selon l'une des revendications précédentes contenant en outre au moins un élément dopant choisi dans le groupe constitué par le phosphore, le bore, le silicium et les halogènes.

**9.** Catalyseur selon l'une des revendications précédentes, dont le support sous forme de fragments présente une taille telle que le diamètre de la sphère circonscrite à au moins 80% desdits fragments est compris entre 0,05 et 3 mm.

**10.** Catalyseur selon la revendication 9, dans lequel le diamètre de la sphère circonscrite est compris entre 0,3 et 1,5 mm pour une mise en oeuvre en lit bouillonnant.

**11.** Catalyseur selon la revendication 9, dans lequel le diamètre de la sphère circonscrite est compris entre 1,0 et 2,0 mm pour une mise en oeuvre en lit fixe.

**12.** Catalyseur selon l'une des revendications précédentes dans lequel la teneur en métal du groupe VIB, exprimée en % poids d'oxyde par rapport au poids du catalyseur final, est comprise entre 1 et 20% et dans lequel la teneur en métal du groupe VIII, exprimée en % poids d'oxyde par rapport au poids du catalyseur final, est comprise entre 0 et 10%.

**13.** Catalyseur selon la revendication 12 dans lequel le métal du groupe VIB est le molybdène et le métal du groupe VIII est le nickel.

**14.** Catalyseur selon l'une des revendications précédentes dans lequel la teneur en métal non noble du groupe VIII est comprise entre 1 et 4% poids.

**15.** Catalyseur selon l'une des revendications précédentes dans lequel l'élément dopant est le phosphore et la teneur en phosphore, exprimée en % poids d'oxyde par rapport au poids de catalyseur final, est comprise entre 0,3 et 10%.

**16.** Catalyseur selon la revendication 15 dans lequel la teneur en phosphore est comprise entre 1,2 et 4% poids.

**17.** Catalyseur selon l'une des revendications précédentes contenant en outre au moins un élément dopant choisi dans le groupe formé par le bore, le silicium et les halogènes à des teneurs, exprimées en % poids d'oxyde par rapport au poids du catalyseur final, sont inférieures à 6% pour le bore, à 5% pour les halogènes et comprise entre 0,1 et 10% pour le silicium.

**18.** Catalyseur selon l'une des revendications précédentes dans lequel la distribution poreuse, déterminée par la technique de porosimétrie Hg, est **caractérisée** comme suit:

- % du volume poreux total en pores de diamètre moyen inférieur à 100 Å: entre 0 et 10
- % du volume poreux total en pores de diamètre moyen compris entre 100 et 1000 A: entre 40 et 90.
- % du volume poreux total en pores de diamètre moyen compris entre 1000 et 5000 Å: entre 5 et 60
- % du volume poreux total en pores de diamètre moyen compris entre 5000 et 10000 Å: entre 5 et 50
- % du volume poreux total en pores de diamètre moyen supérieur à 10000 Å: entre 5 et 20

**19.** Catalyseur selon l'une des revendications précédentes dans lequel la densité de remplissage tassé est comprise entre 0,35 et 0,80 $g/cm^3$ et le volume poreux total déterminé par porosimétrie au mercure est compris entre 0,4 et 1,8 $g/cm^3$.

**20.** Catalyseur selon l'une des revendications précédentes dans lequel le diamètre des pores à VHg/2 est compris entre 300 et 700 Å.

**21.** Catalyseur selon l'une des revendications précédentes, pour lequel dans l'étape a) de granulation, l'alumine active est humectée à l'aide d'une solution aqueuse puis agglomérée dans un granulateur.

**EP 1 986 776 B1**

22. Catalyseur selon l'une des revendications précédentes, pour lequel dans l'étape f) la fraction concassée est imprégnée par une solution aqueuse comprenant au moins un acide permettant de dissoudre au moins une partie de l'alumine du support et au moins un composé, distinct dudit acide, apportant un anion capable de se combiner avec les ions aluminium en solution.

23. Catalyseur selon l'une des revendications précédentes dont le support obtenu à l'issue de l'étape g) est imprégné avec au moins une solution d'au moins un métal catalytique et éventuellement au moins un dopant.

24. Catalyseur selon la revendication 23, pour lequel après l'imprégnation du support, on laisse reposer le solide humide sous une atmosphère humide à une température comprise entre 10 et 80°C, on sèche le solide humide obtenu à une température comprise entre 60 et 150°C et on calcine le solide obtenu après séchage à une température comprise entre 150 et 800°C.

25. Procédé d'hydrotraitement et/ou d'hydroconversion de charges hydrocarbonées lourdes contenant des métaux utilisant un catalyseur selon l'une des revendications précédentes.

26. Procédé selon la revendication 25 dans lequel ledit catalyseur est mis en oeuvre en lit bouillonnant à une température comprise entre 320 et 470°C, sous une pression partielle d'hydrogène entre 3 MPa et 30 MPa, à une vitesse spatiale d'environ 0,1 à 10 volumes de charge par volume de catalyseur et par heure, et avec un rapport hydrogène gazeux sur charge liquide d'hydrocarbures compris entre 100 et 3000 normaux mètres cubes par mètre cube.

27. Procédé selon la revendication 25 dans lequel ledit catalyseur est mis en oeuvre en lit fixe à une température comprise entre 320 et 450°C, sous une pression partielle d'hydrogène entre 3 MPa et 30 MPa, à une vitesse spatiale entre 0,05 et 5 volumes de charge par volume de catalyseur et par heure, et avec un rapport hydrogène gazeux sur charge liquide d'hydrocarbures compris entre 200 et 5000 normaux mètres cubes par mètre cube.

28. Procédé selon la revendication 23, dans lequel ledit catalyseur est utilisé en partie sous forme de fragments et en partie sous forme de billes ou sous forme d'extrudés cylindriques.

**Claims**

1. A catalyst comprising an alumina-based support, at least one catalytic metal or compound of a catalytic metal from group VIB and/or VIII, the pore structure of which is composed of a plurality of juxtaposed agglomerates and each formed by a plurality of acicular platelets, the platelets of each agglomerate generally being oriented radially with respect to the others and with respect to the centre of the agglomerate, said support having an irregular and non-spherical shape and being mainly in the form of fragments obtained by crushing alumina beads, and prepared using a process including the following steps:

   a) granulation starting from an active alumina powder having a low crystallinity and/or amorphous structure, to obtain agglomerates in the form of beads;
   b) maturing in a moist atmosphere between 60°C and 100°C then drying said beads;
   c) sieving to recover a fraction of said beads;
   d) crushing said fraction;
   e) calcining at least a portion of said crushed fraction at a temperature in the range 250°C to 900°C;
   f) impregnating with acid and hydrothermal treatment at a temperature in the range 80°C to 250°C;
   g) drying then calcining at a temperature in the range 500°C to 1100°C.

2. A catalyst according to claim 1, in which the loss on attrition, quantified in accordance with the ASTM D4058-96 standard, is less than 5% by weight.

3. A catalyst according to claim 2, in which the loss on attrition, quantified in accordance with the ASTM D4058-96 standard, is less than 2% by weight.

4. A catalyst according to claim 1, in which the crush strength, measured using the Shell method in accordance with standard SMS 1471-74, is 1.5 MPa or more.

5. A catalyst according to claim 1, in which granulation step a) uses at least one pore-forming agent.

6. A catalyst according to one of the preceding claims, comprising at least one catalytic metal or a compound of a catalytic metal from group VIB.

7. A catalyst according to one of the preceding claims, comprising at least one catalytic metal or a compound of a catalytic metal from group VIII (columns 8, 9 and 10 of the new periodic table notation).

8. A catalyst according to one of the preceding claims, further containing at least one doping element selected from the group constituted by phosphorus, boron, silicon and the halogens.

9. A catalyst according to one of the preceding claims, wherein the support in the form of fragments has a size such that the diameter of the sphere circumscribing at least 80% of said fragments is in the range 0.05 to 3 mm.

10. A catalyst according to claim 9, in which the diameter of the circumscribing sphere is in the range 0.3 to 1.5 mm for an ebullated bed implementation.

11. A catalyst according to claim 9, in which the diameter of the circumscribing sphere is in the range 1.0 to 2.0 mm for a fixed bed implementation.

12. A catalyst according to one of the preceding claims, in which the amount of group VIB metal, expressed as the % by weight of oxide with respect to the final catalyst weight, is in the range 1% to 20% and in which the amount of group VIII metal, expressed as the % by weight of oxide with respect to the final catalyst weight, is in the range 0 to 10%.

13. A catalyst according to claim 12, in which the group VIB metal is molybdenum and the group VIII metal is nickel.

14. A catalyst according to one of the preceding claims, in which the amount of non noble group VIII metal is in the range 1% to 4% by weight.

15. A catalyst according to one of the preceding claims, in which the doping element is phosphorus and the amount of phosphorus, expressed as a % by weight of oxide with respect to the final catalyst weight, is in the range 0.3% to 10%.

16. A catalyst according to claim 15, in which the amount of phosphorus is in the range 1.2% to 4% by weight.

17. A catalyst according to one of the preceding claims, further containing at least one doping element selected from the group formed by boron, silicon and the halogens in amounts, expressed as the % by weight of oxide with respect to the final catalyst weight, of less than 6% for boron, less than 5% for the halogens and in the range 0.1 % to 10% for silicon.

18. A catalyst according to one of the preceding claims, in which the pore distribution, determined by the Hg porosimetry technique, is **characterized** as follows:

   • % of total pore volume as pores with a mean diameter of less than 100 Å: between 0 and 10
   • % of total pore volume as pores with a mean diameter between 100 and 1000Å: between 40 and 90
   • % of total pore volume as pores with a mean diameter between 1000 and 5000 Å: between 5 and 60
   • % of total pore volume as pores with a mean diameter between 5000 and 10000 Å: between 5 and 50
   • % of total pore volume as pores with a mean diameter of more than 10000 Å: between 5 and 20.

19. A catalyst according to one of the preceding claims, in which the settled packing density is in the range 0.35 to 0.80 g/cm$^3$ and the total pore volume, determined by mercury porosimetry, is in the range 0.4 to 1.8 g/cm$^3$.

20. A catalyst according to one of the preceding claims, in which the pore diameter at VHg/2 is in the range 300 to 700 Å.

21. A catalyst according to one of the preceding claims in which, in granulation step a), the active alumina is moistened using an aqueous solution then agglomerated in a granulator.

22. A catalyst according to one of the preceding claims, in which in step f), the crushed fraction is impregnated with an aqueous solution comprising at least one acid which can dissolve at least a portion of the alumina of the support, and at least one compound, distinct from said acid, supplying an anion which is capable of combining with aluminium ions in solution.

**23.** A catalyst according to one of the preceding claims, wherein the support obtained at the end of step g) is impregnated with at least one solution of at least one catalytic metal and optionally at least one dopant.

**24.** A catalyst according to claim 23, wherein after impregnation of the support, the moist solid is left in a moist atmosphere at a temperature in the range 10°C to 80°C, the moist solid obtained is dried at a temperature in the range 60°C to 150°C and the solid obtained is calcined after drying at a temperature in the range 150°C to 800°C.

**25.** A process for hydrotreating and/or hydroconverting heavy metal-containing hydrocarbon feeds using a catalyst according to one of the preceding claims.

**26.** A process according to claim 25, in which said catalyst is employed in ebullated bed mode at a temperature in the range 320°C to 470°C, at a partial pressure of hydrogen of between 3 MPa and 30 MPa, at a space velocity of about 0.1 to 10 volumes of feed per volume of catalyst per hour, and with a ratio of gaseous hydrogen to liquid hydrocarbon feed in the range 100 to 3000 normal cubic metres per cubic metre.

**27.** A process according to claim 25, in which said catalyst is employed in fixed bed mode at a temperature in the range 320°C to 450°C, at a partial pressure of hydrogen of between 3 MPa and 30 MPa, at a space velocity of about 0.05 to 5 volumes of feed per volume of catalyst per hour, and with a ratio of gaseous hydrogen to liquid hydrocarbon feed in the range 200 to 5000 normal cubic metres per cubic metre.

**28.** A process according to claim 23, in which said catalyst is used partly in the form of fragments and partly in the form of beads or in the form of cylindrical extrudates.

**Patentansprüche**

**1.** Katalysator, der einen Träger auf der Basis von Aluminiumoxid, mindestens ein katalytisches Metall oder eine Verbindung aus einem katalytischem Metall der Gruppe VIB und/oder VIII umfasst, dessen Porenstruktur sich aus einer Vielzahl von juxtaponierten Agglomeraten zusammensetzt, die jeweils aus einer Vielzahl von nadelförmigen Plättchen gebildet werden, wobei die Plättchen jedes Agglomerats im Allgemeinen gegeneinander und bezogen auf das Zentrum des Agglomerats radial ausgerichtet sind, wobei der Träger eine unregelmäßige und nicht kugelförmige Form aufweist und überwiegend in Form von Fragmenten vorliegt, die durch Zerkleinerung von Aluminiumoxidkügelchen erhalten wurden, und der gemäß einem Verfahren hergestellt wird, das die folgenden Schritte beinhaltet:

a) Granulieren ausgehend von einem Pulver aus aktivem Aluminiumoxid, das eine schlecht kristallisierte und/oder amorphe Struktur aufweist, um Agglomerate in Form von Kügelchen zu erhalten;
b) Reifen in feuchter Atmosphäre zwischen 60 und 100 °C, dann Trocknen der Kügelchen;
c) Sieben, um ein Fraktion der Kügelchen zu gewinnen;
d) Zerkleinern der Fraktion;
e) Kalzinieren mindestens eines Teils der zerkleinerten Fraktion bei einer Temperatur im Bereich zwischen 250 und 900 °C
f) Säureimprägnieren und hydrothermisches Behandeln bei einer Temperatur im Bereich zwischen 80 und 250 °C;
g) Trocken, dann Kalzinieren bei einer Temperatur im Beriech zwischen 500 und 1100°C.

**2.** Katalysator nach Anspruch 1, für den der Reibungsverlust, quantifiziert gemäß der ASTM-Norm D4058-96, weniger als 5 Gew.-% beträgt.

**3.** Katalysator nach Anspruch 2, für den der Reibungsverlust, quantifiziert gemäß der ASTM-Norm D4058-96, weniger als 2 Gew.-% beträgt.

**4.** Katalysator nach Anspruch 1, für den die Druckfestigkeit, gemessen mit dem Shell-Verfahren gemäß der SMS-Norm 1471-74, größer oder gleich 1.5 MPa ist.

**5.** Katalysator nach Anspruch 1, für den im Granulationsschritt a) mindestens ein porenbildendes Mittel eingesetzt wird.

**6.** Katalysator nach einem der vorhergehenden Ansprüche, der mindestens ein katalytisches Metall oder eine Verbindung aus einem katalytischen Metall der Gruppe VIB umfasst.

7. Katalysator nach einem der vorhergehenden Ansprüche, der mindestens ein katalytisches Metall oder eine Verbindung aus einem katalytischen Metall der Gruppe VIII (Spalten 8, 9 und 10 der neuen Notation des Periodensystems der Elemente) umfasst.

8. Katalysator nach einem der vorhergehenden Ansprüche, der ferner mindestens ein dotierendes Element umfasst, das ausgewählt ist aus der Gruppe gebildet aus Phosphor, Bor und Silizium und Halogenen.

9. Katalysator nach einem der vorhergehenden Ansprüche, dessen Träger in Form von Fragmenten eine solche Größe aufweist, dass der Durchmesser der Umkugel für mindestens 80 % der Fragmente im Bereich zwischen 0.05 und 3 mm liegt.

10. Katalysator nach Anspruch 9, wobei der Durchmesser der Umkugel für einen Einsatz im wallenden Bett im Bereich zwischen 0.3 und 1.5 mm liegt.

11. Katalysator nach Anspruch 9, wobei der Durchmesser der Umkugel für einen Einsatz im Festbett im Bereich zwischen 1.0. und 2.0 mm liegt.

12. Katalysator nach einem der vorhergehenden Ansprüche, wobei der Gehalt an Metall der Gruppe VIB, ausgedrückt in Gew.-% des Oxids bezogen auf den fertigen Katalysator, im Bereich zwischen 1 und 20 % liegt, und wobei der Gehalt an Metall der Gruppe VIII, ausgedrückt in Gew.-% des Oxids bezogen auf das Gewicht des fertigen Katalysators, im Bereich zwischen 0 und 10 % liegt.

13. Katalysator nach Anspruch 12, wobei das Metall der Gruppe VIB Molybdän ist und das Metall der Gruppe VIII Nickel ist.

14. Katalysator nach einem der vorhergehenden Ansprüche, wobei der Gehalt an Nichtedelmetall der Gruppe VIII im Bereich zwischen 1 und 4 Gew.-% liegt.

15. Katalysator nach einem der vorhergehenden Ansprüche, wobei das dotierende Element Phosphor ist und der Gehalt an Phosphor, ausgedrückt in Gew.-% des Oxids bezogen auf das Gewicht des fertigen Katalysators, im Bereich zwischen 0.3 und 10 % liegt.

16. Katalysator nach Anspruch 15, wobei der Gehalt an Phosphor im Bereich zwischen 1.2 und 4 Gew.-% liegt.

17. Katalysator nach einem der vorhergehenden Ansprüche, der ferner mindestens ein dotierendes Element enthält, das ausgewählt ist aus der Gruppe gebildet aus Bor, Silizium und Halogenen, wobei die Gehalte, ausgedrückt in Gew.-% des Oxids bezogen auf das Gewicht des fertigen Katalysators, für Bor kleiner als 6 % sind, für die Halogen kleiner als 5 % liegen und für Silizium im Bereich zwischen 0.1 und 10 % liegen.

18. Katalysator nach einem der vorhergehenden Ansprüche, wobei die Porenverteilung, bestimmt mittels der Technik der Hg-Porosimetrie, wie folgt **gekennzeichnet** ist:

   - % des gesamten Porenvolumens an Poren mit einem mittlerem Durchmesser kleiner als 100 Å: zwischen 0 und 10,
   - % des gesamten Porenvolumens an Poren mit einem mittlerem Durchmesser im Bereich zwischen 100 und 1000 Å: zwischen 40 und 90,
   - % des gesamten Porenvolumens an Poren mit einem mittlerem Durchmesser im Bereich zwischen 1000 und 5000 Å: zwischen 5 und 60,
   - % des gesamten Porenvolumens an Poren mit einem mittlerem Durchmesser im Bereich zwischen 5000 und 10000 Å: zwischen 5 und 50,
   - % des gesamten Porenvolumens an Poren mit einem mittlerem Durchmesser größer als 10000 Ä: zwischen 5 und 20.

19. Katalysator nach einem der vorhergehenden Ansprüche, wobei die Packungsdichte im Bereich zwischen 0.35 und 0.80 g/cm$^3$ liegt und das gesamte Porenvolumen, bestimmt mittels Quecksilberporosimetrie, im Bereich zwischen 0.4 und 1.8 g/cm$^3$ liegt.

20. Katalysator nach einem der vorhergehenden Ansprüche, wobei der Porendurchmesser bei $V_{Hg/2}$ im Bereich zwischen 300 und 700 Å liegt.

21. Katalysator nach einem der vorhergehenden Ansprüche, für den im Granulationsschritt a) das aktive Aluminiumoxid mit Hilfe einer wässrigen Lösung befeuchtet, dann in einem Granulator agglomeriert wird.

22. Katalysator nach einem der vorhergehenden Ansprüche, für den im Schritt f) die zerkleinerte Fraktion mit einer wässrigen Lösung imprägniert wird, die mindestens eine Säure, die es ermöglicht, mindestens einen Teil des Aluminiumoxids des Trägers aufzulösen und mindestens eine Verbindung umfasst, die verschieden von der Säure ist, die ein Anion einbringt, das in der Lage ist, sich mit den Aluminiumionen in Lösung zu kombinieren.

23. Katalysator nach einem der vorhergehenden Ansprüche, dessen Träger, der am Ende von Schritt g) erhalten wird, mit mindestens einer Lösung aus mindestens einem katalytischen Metall und gegebenenfalls mindestens einem Dotierungsmittel imprägniert ist.

24. Katalysator nach Anspruch 23, für den der feuchte Feststoff nach der Imprägnierung des Trägers unter einer feuchten Atmosphäre bei einer Temperatur im Bereich zwischen 10 und 80 °C ruhen gelassen wird, der erhaltene feuchte Feststoff bei einer Temperatur im Bereich zwischen 60 und 150 °C getrocknet wird und der erhaltenen Feststoff nach dem Trocknen bei einer Temperatur im Bereich zwischen 150 und 800 °C kalziniert wird.

25. Verfahren zur Hydrobehandlung und/oder Hydrokonversion von schweren Kohlenwasserstoffbeschickungen, die Metalle enthalten, unter Verwendung eines Katalysators nach einem der vorhergehenden Ansprüche.

26. Verfahren nach Anspruch 25, wobei der Katalysator im wallenden Bett bei einer Temperatur im Bereich zwischen 320 und 470 °C, unter einem Wasserstoffpartialdruck zwischen 3 MPa und 30 MPa, bei einer Raumgeschwindigkeit von etwa 0.1 bis 10 Beschickungsvolumina je Katalysatorvolumen pro Stunde, und mit einem Verhältnis von gasförmigen Wasserstoff zur flüssigen Kohlenwasserstoffbeschickung im Bereich zwischen 100 und 3000 Normalkubikmeter pro Kubikmeter eingesetzt wird.

27. Verfahren nach Anspruch 25, wobei der Katalysator im Festbett bei einer Temperatur im Bereich zwischen 320 und 450 °C, unter einem Wasserstoffpartialdruck zwischen 3 MPa und 30 MPa, bei einer Raumgeschwindigkeit von etwa 0.05 bis 5 Beschickungsvolumina pro Katalysatorvolumen und pro Stunde, und mit einem Verhältnis von gasförmigen Wasserstoff zur flüssigen Kohlenwasserstoffbeschickung im Bereich zwischen 200 und 5000 Normalkubikmeter pro Kubikmeter eingesetzt wird.

28. Verfahren nach Anspruch 23, wobei der Katalysator teilweise in Form von Fragmenten und teilweise in Form von Kügelchen oder in Form von zylinderförmigen Extrudaten verwendet wird.

## RÉFÉRENCES CITÉES DANS LA DESCRIPTION

**Documents brevets cités dans la description**

- EP 1364707 A1
- FR 2839902
- US 4552650 A
- FR 2528721 A
- FR 2764213
- US 6043187 A
- FR 2534828

- FR 1438497
- FR 1108011
- US 4874506 A
- US 4437973 A
- US 4521295 A
- US 4495060 A